# EUROPÄISCHE PATENTSCHRIFT

(11) **EP 4 375 056 B1**
(45) Veröffentlichungstag und Bekanntmachung des Hinweises auf die Patenterteilung: **10.09.2025**
(21) Anmeldenummer: 23208676.9
(22) Anmeldetag: 09.11.2023
(51) Int. Cl.: B26D 5/00, B29D 30/08, B26D 3/00, B26D 5/02, B26D 7/08, B29D 30/46

(54) **VERFAHREN UND SYSTEM ZUM HERSTELLEN EINES REIFENS FÜR EIN KRAFTFAHRZEUG**
METHOD AND SYSTEM FOR PRODUCING A TYRE FOR A MOTOR VEHICLE
PROCÉDÉ ET SYSTÈME DE FABRICATION D'UN PNEU POUR UN VÉHICULE AUTOMOBILE

(30) Priorität: 22.11.2022 DE 102022212439
(43) Veröffentlichungstag der Anmeldung: 29.05.2024
(73) Patentinhaber: Continental Reifen Deutschland GmbH, 30175 Hannover (DE)
(72) Erfinder: Schischke, Henrik, 30165 Hannover (DE); NanaSiaw, Samuel, 30165 Hannover (DE); Gümmer, Oliver, 30165 Hannover (DE); Scheibe, Henning, 30165 Hannover (DE); Cepica, Vojtech, 30165 Hannover (DE)
(74) Vertreter: Continental Corporation

(56) Entgegenhaltungen:
- EP-A2- 1 262 288
- WO-A1-00/51810
- JP-A- 2007 062 296

## Beschreibung

Verfahren und System zum Herstellen eines Reifens für ein Kraftfahrzeug Die vorliegende Erfindung betrifft ein Verfahren und ein System zum Herstellen eines Reifens für ein Kraftfahrzeug.

Fahrzeuge weisen Reifen auf, die üblicherweise ein Gummibauteil in Form eines Kautschuk-Reifenprofils haben. Bei der Herstellung der Reifen ist stets darauf zu achten, dass Fehlstellen in oder an dem Reifen verhindert oder gering gehalten werden. Dies betrifft entsprechend auch das Reifenprofil. Das Patentdokument EP 1 262 288 A2 offenbart ein Verfahren zur Herstellung eines Reifens mit ähnlichen Merkmalen wie in der Oberbegriff des unabhängigen Anspruchs 1.

Es ist eine Aufgabe, die der Erfindung zugrunde liegt, ein Verfahren und ein System zum Herstellen eines Reifens für ein Kraftfahrzeug bereitzustellen, die jeweils zu einem verringerten Auftreten von Fehlstellen in oder an dem Reifen beitragen können.

Die Aufgabe wird jeweils durch die Merkmale der unabhängigen Patentansprüche gelöst. Vorteilhafte Weiterbildungen sind in den abhängigen Patentansprüchen angegeben.

Gemäß einem Aspekt der Erfindung umfasst ein Verfahren zum Herstellen eines Reifens für ein Kraftfahrzeug ein Bereitstellen eines Gummibauteils, das entlang einer Längsachse eine Materialbahn zum Ausbilden des Reifens einrichtet und einen vorgegebenen Profilquerschnitt, insbesondere mit variierender Dicke, aufweist. Das Verfahren umfasst weiter ein Bereitstellen eines Systems zum Schneiden des Gummibauteils. Das System realisiert insbesondere eine Ultraschallschneidvorrichtung und umfasst eine Steuereinheit, eine Halterung, ein Ultraschallschneidmesser und eine Sensoreinheit mit einem Abstandssensor. Das Ultraschallschneidmesser und die Sensoreinheit sind mit der Halterung vorgegeben gekoppelt, wobei die Sensoreinheit in Bezug auf eine Verarbeitungsrichtung des zu schneidenden Gummibauteils vor dem Ultraschallschneidmesser angeordnet ist. Die Sensoreinheit und das Ultraschallschneidmesser sind ferner signaltechnisch mit der Steuereinheit gekoppelt, und die Sensoreinheit ist dazu eingerichtet, mittels des Abstandssensors einen Abstand zu erfassen, der repräsentativ ist für eine lokale Dicke des zu schneidenden Gummibauteils. Das Verfahren umfasst weiter ein Erfassen des Abstands mittels des Abstandssensors der Sensoreinheit, und ein Steuern des Ultraschallschneidmessers mittels der Steuereinheit zum Schneiden des Gummibauteils in Abhängigkeit von dem erfassten Abstand.

Mittels des beschriebenen Verfahrens ist ein automatisiert geregeltes Ultraschallschneiden eines Gummibauteils realisierbar, der zu einem verringerten Auftreten von Fehlstellen in oder an dem Reifen beitragen kann. Der Abstand wird mittels der Sensoreinheit automatisiert erfasst und der Steuereinheit übermittelt, sodass diese das Ultraschallschneidmesser ansteuern kann, um ein bestmögliches Schneiden des Gummibauteils zu ermöglichen. Der Abstand kann zum Beispiel als der Abstand zwischen dem Abstandssensor und einer Oberseite des Gummibauteils realisiert sein, die dem Abstandssensor zugewandt ist. Alternativ kann der Abstand als eine Distanz zwischen dem Abstandssensor und einer Referenzposition realisiert sein, welche im Zusammenhang mit einer Höhe bzw. Dicke des Gummibauteils steht, sodass aus dem aktuellen Abstand eine zugehörige Dicke des Gummibauteils ermittelt werden kann.

Das Gummibauteil bildet eine spätere Fläche in oder an dem Reifen aus. Der Reifen kann eine Gummikomponente eines LKWs, eines PKWs oder einer Landwirtschaftsmaschine sein. Im Zusammenhang mit einem LKW-Reifen kann das Gummibauteil zum Beispiel das Material zum Ausbilden eines Superbauteils bereitstellen, das einen Innenliner und Seitenwände umfasst. Bei dem Reifenbau ist es stets erstrebenswert, eine möglichst homogene oder fehlstellenfreie in sich geschlossene Fläche auszubilden. Dies trifft insbesondere auf die Schnittstelle zu, die auch als Spleißbereich bezeichnet wird und an der der abgeschnittene Gummibauteilabschnitt in sich geschlossen wird, um den Reifen zusammenzubauen und zum Beispiel eine in sich geschlossene Lauffläche auszubilden. Mittels des beschriebenen Verfahrens kann diese Schnittstelle besonders klebrig, glatt und homogen ausgebildet werden und ein Auftreten von unerwünschten Löchern im Übergang kann signifikant reduziert werden. Somit ermöglicht das Verfahren nachfolgend einen zuverlässigen Vulkanisierungsprozess und ein Ausbilden eines Reifens mit einer hohen Qualität in Bezug auf seine Rundheit.

Es ist eine Erkenntnis im Zusammenhang mit der vorliegenden Erfindung, dass das Zerschneiden von Gummilagen mit Ultraschalltechnologie eine zuverlässige und gleichbleibende Schnittqualität bei geringem Messerverschleiß ermöglicht. Allerdings haben die zu schneidenden Materialien in der Regel keine konstante Dicke über die Schnittlänge, sodass auf konventionelle Weise, zum Beispiel bei der Herstellung eines LKW-Reifens, bis zu 10 verschiedene Schnittbereiche manuell bestimmt und definiert werden müssen, um das Ultraschallschneiden an die unterschiedlichen Materialdicken anzupassen und eine gute Schneidqualität gewährleisten zu können. Eine manuelle Bestimmung der Schnittbereiche und zugehöriger Parameter ist zeitaufwendig und müssen für jede Reifengröße neu bestimmt werden. Passen vorgegebene Parameter nicht zu einem jeweiligen Reifen, so ist die Qualität und Klebrigkeit der geschnittenen Oberfläche minderwertig. Dies kann zum Ausschuss des fertigen Reifenrohlings führen.

Mittels des beschriebenen Verfahrens wird eine aktuelle Dicke des Gummibauteils automatisiert berücksichtigt kurz bevor dieser mittels des Ultraschallmessers geschnitten wird. Der Abstandssensor ist zum Beispiel ortsfest an der Halterung angeordnet und an dem Abstandssensor fährt das zu schneidende Gummibauteil auf einem Laufband vorbei. Aufgrund des variierenden Profilquerschnitts verringert oder vergrößert sich der Abstand zwischen dem Abstandssensor und dem Gummibauteil. Es werden demgemäß automatisiert Daten erfasst, die Informationen über den Profilquerschnitt des Gummibauteils, wie die Dicke, beinhalten, sodass der Schneidprozess nutzbringend angepasst werden kann. Es ist somit keine zeitaufwendige und kostspielige manuelle Kontrolle und Eingabe erforderlich, um das Gummibauteil in Abschnitte mit zugehöriger Dicke zu unterteilen und entsprechende Schnittbereiche aufwendig zu definieren.

Gemäß einer Weiterbildung des Verfahrens umfasst das Steuern des Ultraschallschneidmessers ein Einstellen eines Messervorschubs des Ultraschallschneidmessers in Abhängigkeit von dem erfassten Abstand. Zum Beispiel kann das Verfahren ein Erfassen eines ersten Abstands an einer ersten Position des Gummibauteils und Erfassen eines zweiten Abstands an einer zweiten Position des Gummibauteils umfassen. Daraufhin kann mittels der Steuereinheit ein erster Messervorschub des Ultraschallschneidmessers und ein zweiter Messervorschub des Ultraschallschneidmessers in Abhängigkeit von dem ersten Abstand bzw. dem zweiten Abstand eingestellt werden. Sofern der erste Abstand größer ist als der zweite Abstand und demgemäß eine lokale Dicke an der ersten Position geringer ist als an der zweiten Position, wird das Ultraschallschneidmesser vorzugsweise so angesteuert, dass der erste Messervorschub größer eingestellt wird als der zweite Messervorschub. Das Ultraschallschneidmesser kann zum Beispiel so gefertigt sein, dass ein Messervorschub von 1 mm/s bis 100 mm/s einstellbar ist. Der Messervorschub entspricht im Wesentlichen der Schneidgeschwindigkeit und kann zum Beispiel zwischen 5 mm/s bis 40 mm/s oder bis 80 mm/s variiert werden.

Gemäß einer weiteren Weiterbildung des Verfahrens umfasst das Steuern des Ultraschallschneidmessers ein Einstellen einer Messeramplitude des Ultraschallschneidmessers in Abhängigkeit von dem erfassten Abstand. Zum Beispiel umfasst das Verfahren ein Erfassen eines ersten Abstands an einer ersten Position des Gummibauteils und Erfassen eines zweiten Abstands an einer zweiten Position des Gummibauteils umfassen. Daraufhin kann mittels der Steuereinheit eine erste Messeramplitude des Ultraschallschneidmessers und eine zweite Messeramplitude des Ultraschallschneidmessers in Abhängigkeit von dem ersten Abstand bzw. dem zweiten Abstand eingestellt werden. Sofern der erste Abstand größer ist als der zweite Abstand und demgemäß eine lokale Dicke an der ersten Position geringer ist als an der zweiten Position, wird das Ultraschallschneidmesser vorzugsweise so angesteuert, dass die erste Messeramplitude kleiner eingestellt wird als der zweite Messeramplitude.

Gemäß einer bevorzugten Weiterbildung des Verfahrens umfasst das Steuern des Ultraschallschneidmessers ein Einstellen und Konstanthalten einer maximal zulässigen Messeramplitude des Ultraschallschneidmessers, und ein Einstellen eines Messervorschubs des Ultraschallschneidmessers in Abhängigkeit von dem jeweils erfassten Abstand. Somit kann eine nutzbringende Regelung des Messervorschubs bei konstanter maximal möglicher Messeramplitude erfolgen, die eine besonders zeitsparende Schneiddauer bei sehr guter Schneidqualität und Klebrigkeit der Schnittstelle ermöglicht, welche eine zuverlässige und vorteilhafte Reifenherstellung begünstigen. Dies kann sich besonders bei relativ kurzen Maschinenzykluszeiten vorteilhaft auf die Reifenherstellung auswirken.

Das Ultraschallschneidmesser kann zum Beispiel mit 100% seiner möglichen Messeramplitude betrieben werden. Allerdings ist es nutzbringend, dass das Ultraschallschneidmesser mit 80% oder 90% seiner möglichen Messeramplitude zu betreiben, sodass das Ultraschallschneidmesser nicht am Limit betrieben wird. Demgemäß können 80% oder 90% der möglichen Messeramplitude als maximal zulässige Messeramplitude bezeichnet werden. Eine Messeramplitude von 20% der gerätebedingten, maximal möglichen Einstellung des Ultraschallschneidmessers kann dann zum Beispiel als geringe Messeramplitude zu bezeichnet werden.

Gemäß einer weiteren Weiterbildung umfasst das Verfahren ein Ermitteln einer zugehörigen lokalen Dicke des Gummibauteils in Abhängigkeit von dem erfassten Abstand, und ein Steuern des Ultraschallschneidmessers zum Schneiden des Gummibauteils mittels der Steuereinheit in Abhängigkeit von der ermittelten lokalen Dicke des Gummibauteils. Alternativ oder zusätzlich kann das Verfahren dahingehend erweitert sein, dass das System ferner eine Abtastungseinheit mit einer Rolle und einer Messplatte aufweist, die miteinander und mit der Halterung gekoppelt sind. Die Messplatte ist in Abstimmung auf den Abstandssensor vorgegeben angeordnet und der variable, zu messende Abstand ist zwischen dem Abstandssensor und der Messplatte eingerichtet. Das Verfahren umfasst demgemäß ein Inkontaktbringen der Rolle mit einer Oberseite des Gummibauteils und dadurch Ausbilden und Erfassen des Abstands zwischen dem Abstandssensor und der Messplatte.

Die Messplatte bildet ein Referenzobjekt, das sich für eine besonders zuverlässige Messung des Abstands eignet. Alternativ oder zusätzlich, zum Beispiel mittels eines weiteren Abstandssensors, kann der Abstand zu der Oberseite des Gummibauteils direkt gemessen werden. Die Messplatte ist zum Beispiel starr mit der Rolle verbunden, sodass eine Bewegung der Rolle, zum Beispiel nach oben oder unten, eine entsprechende Bewegung der Messplatte begründet. Der Abstandssensor ist vorzugsweise starr an der Halterung der Schneidvorrichtung angeordnet, wobei der Abstandssensor und die Messplatte relativ zueinander beweglich sind, um variierende Abstände und unterschiedliche Dicken des Gummibauteils ermitteln zu können. Der Abstandssensor und die Messplatte sind zum Beispiel mittels Federelemente miteinander gekoppelt, sodass sich die Messplatte auf den Abstandssensor zubewegen oder von diesem wegbewegen kann, je nachdem ob ein dickerer oder dünnerer Abschnitt des Gummibauteils mit der Rolle überfahren wird.

Die Rolle ist vorzugsweise in ihrer Abmessung auf das Gummibauteil abgestimmt ausgebildet und zum Beispiel so klein ausgeführt, dass auch kleine Änderungen des Profilquerschnitts erfasst werden können. Die Rolle hat zum Beispiel einen Durchmesser zwischen 10-20 mm.

Insbesondere wird das Verfahren kontinuierlich oder fortlaufend durchgeführt, sodass gemäß einer weiteren Weiterbildung des Verfahrens das Erfassen des Abstands und das Steuern des Ultraschallschneidmessers fortlaufend in Abhängigkeit von einer Verarbeitungsbewegung des Gummibauteils durchgeführt werden. Somit wird fortlaufende eine jeweilige lokale Dicke des Gummibauteils in Abhängigkeit von dem zugehörigen Abstand ermittelt, und fortlaufend das Ultraschallschneidmesser in Abhängigkeit von der ermittelten lokalen Dicke des Gummibauteils angesteuert.

Das Verfahren kann ferner als ausführbare Anweisungen eines Computerprogramms hinterlegt sein. Ferner kann ein Computerprogrammprodukt, wie ein USB-Speicherträger, vorgesehen sein, das solche ausführbaren Anweisungen enthält.

Gemäß einem weiteren Aspekt der Erfindung weist ein System zum Herstellen eines Reifens für ein Kraftfahrzeug eine Steuereinheit, eine Halterung und ein Ultraschallschneidmesser auf, das mit der Halterung vorgegeben gekoppelt ist. Das System umfasst weiter eine Sensoreinheit mit einem Abstandssensor, wobei die Sensoreinheit mit der Halterung vorgegeben gekoppelt und in Bezug auf eine Verarbeitungsrichtung eines zu schneidenden Gummibauteils vor dem Ultraschallschneidmesser angeordnet ist. Die Sensoreinheit und das Ultraschallschneidmesser sind ferner signaltechnisch mit der Steuereinheit gekoppelt. Die Sensoreinheit ist dazu eingerichtet, mittels des Abstandssensors einen Abstand zu erfassen, der repräsentativ ist für eine lokale Dicke des zu schneidenden Gummibauteils, sodass das Ultraschallschneidmesser zum Schneiden des Gummibauteils mittels der Steuereinheit in Abhängigkeit von dem erfassten Abstand ansteuerbar ist.

Das System kann zusätzlich eine Abtastungseinheit mit einer Rolle und einer Messplatte aufweisen, die miteinander und mit der Halterung gekoppelt sind. Die Rolle ist dazu eingerichtet, in Kontakt mit einer Oberseite des zu schneidenden Gummibauteils zu kommen und die Oberseite abzufahren. Die Messplatte ist in Abstimmung auf den Abstandssensor vorgegeben angeordnet und der zu messende Abstand ist zwischen dem Abstandssensor und der Messplatte eingerichtet.

Das System realisiert eine Ultraschallschneidvorrichtung, mittels derer zu einer kostengünstigen und zuverlässiges Reifenherstellung und einem verringerten Auftreten von Fehlstellen in oder an dem Reifen beigetragen werden kann. Das System ist dazu befähigt, eine Ausgestaltung des zuvor beschriebenen Verfahrens durchzuführen, sodass Merkmale und Eigenschaften, die im Zusammenhang mit dem Verfahren beschrieben sind, auch für das System offenbart sind und umgekehrt.

Anstatt Schneidparameter und Bereiche für verschiedene Reifenkonzepte manuell von Hand bestimmen zu müssen, erkennt das System die für den Schneidprozess besonders relevanten Materialparameter automatisch. Somit können Materialkonturen des Gummibauteils in bestmöglicher Qualität geschnitten werden. Dabei werden insbesondere die Messeramplitude und/oder der Messervorschub des Ultraschallmessers an die Form des Gummibauteils angepasst.

Es ist eine Erkenntnis im Zusammenhang mit der vorliegenden Erfindung, dass bei konstanter Messeramplitude dünnes Material des Gummibauteils mit höherem Messervorschub geschnitten werden kann als dickes Material. Bei konstantem Messervorschub wird vorzugsweise die Messeramplitude bei dünnem Material reduziert. Ist die Messeramplitude für eine jeweilige Materialdicke und einem vorgegebenem Messervorschub zu groß, so kann sich das zu schneidende Material zu stark erwärmen und vulkanisieren. Ist die Messeramplitude für die jeweilige Materialdicke und einen vorgegebenen Messervorschub zu klein, so wird das Material gegebenenfalls nicht komplett oder mit mangelhafter Qualität durchgeschnitten. Mittels des beschriebenen Systems und dem korrespondierenden Verfahren kann diesen nachteiligen Effekten entgegengewirkt werden.

In relativ kurzer Distanz vor dem Ultraschallmesser, zum Beispiel 10-40 mm, wird die lokale Materialdicke mit dem Abstandssensor bestimmt. Die erfasste Materialdicke wird dann genutzt, um zum Beispiel eine Schnittgeschwindigkeit des Ultraschallmessers bei konstanter Messeramplitude zu regeln. Dünne Bereiche des Gummibauteils werden proportional schneller geschnitten als dicke Bereiche. Alternativ kann auch die Messeramplitude bei konstanter Schneidgeschwindigkeit geregelt werden. Dünne Bereiche des Gummibauteils werden dann mit einer niedrigeren Vorschubgeschwindigkeit geschnitten als dicke Bereiche. Alternativ können auch die Messeramplitude und die Schneidgeschwindigkeit geregelt werden.

Im Folgenden sind Ausführungsbeispiele der Erfindung anhand schematischer Zeichnungen erläutert. Es zeigen:
- Figur 1: ein schematisches Ausführungsbeispiel eines Gummibauteils zum Herstellen eines Reifens für ein Kraftfahrzeug,
- Figur 2: ein Ablaufdiagramm für ein Verfahren zum Herstellen eines Reifens für ein Kraftfahrzeug, und
- Figur 3: ein Ausführungsbeispiel eines Systems zum Herstellen eines Reifens für ein Kraftfahrzeug.

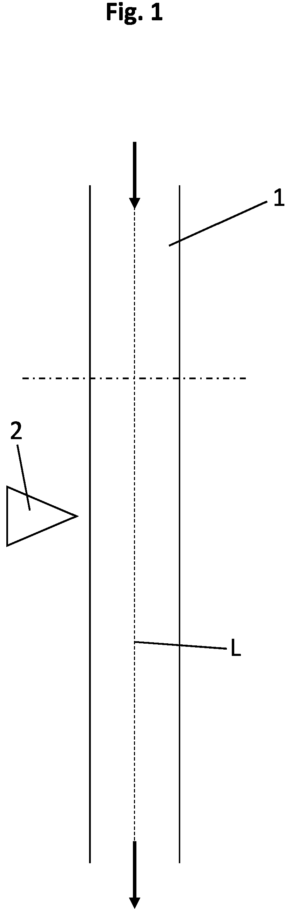

Figur 1 zeigt schematisch ein Gummibauteil 1, der sich überwiegend entlang einer Längsachse L erstreckt. Das Gummibauteil 1 bildet eine Materialbahn zum Herstellen eines Reifens für ein Kraftfahrzeug aus. Das Gummibauteil 1 weist ein vorgegebenes Reifenprofil auf, das zum Beispiel an gegenüberliegenden Rändern jeweils eine Außenflanke und dazwischenliegende, Schulterbereiche sowie einen Mittelbereich aufweist. Die Figur 1 zeigt zum Beispiel eine Aufsicht auf das Gummibauteil 1 und ein Profilquerschnitt erstreckt sich gemäß der gezeichneten gestrichelt-punktierten Linie, die quer zu der Längsachse L verläuft. Der Profilquerschnitt für einen LKW-Reifen weist zum Beispiel relativ dicke Ränder oder Außenflanken und schmalere Schulterbereiche auf. Die Dicke des Gummibauteils 1 kann zum Beispiel von 0,1 mm bis 15 mm variieren. Das Gummibauteil 1 wird an einer vorgegebenen Position mittels einer Schneidvorrichtung 1 getrennt, um einzelne Abschnitte oder Segmente auszubilden, die später zum Beispiel eine umlaufende Fläche eines jeweiligen Innenreifens für einen LKW-Reifen, ausgestalten. Die Länge der abgetrennten Abschnitte ist daher im Wesentlichen auf den späteren Umfang des herzustellenden Reifens abgestimmt.

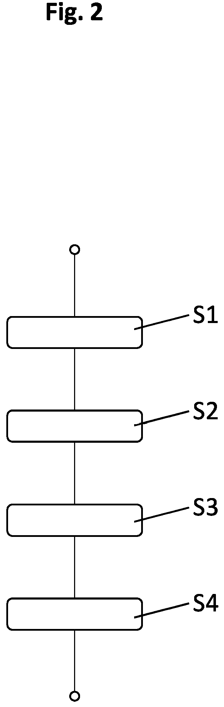

Ein Verfahren zum Herstellen des Reifens für ein Kraftfahrzeug kann gemäß dem Ablaufdiagramm nach Figur 2 wie folgt durchgeführt werden:
In einem Schritt S1 wird das Gummibauteil 1 mit einem zugehörigen Profil bereitgestellt. Das Profil weist zum Beispiel an den Rändern eine geringere Dicke auf als in der Mitte. Die Dicke des Gummibauteils 1 kann auch als Höhe bezeichnet werden und ist senkrecht orientiert zu einer Breite und einer Länge des Gummibauteils 1, die üblicherweise die Haupterstreckungsebene des Gummibauteils 1 aufspannen, wie es zum Beispiel in Figur 1 illustriert ist.

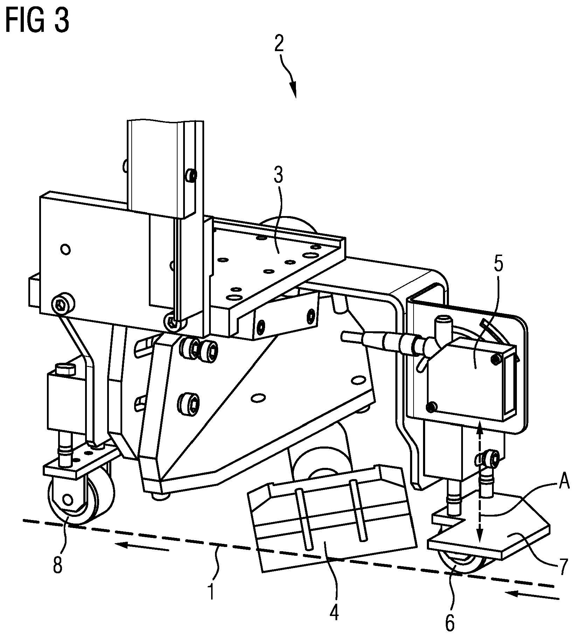

In einem Schritt S2 wird ein System zum Schneiden des Gummibauteils 1 bereitgestellt, dass eine Schneidvorrichtung 2 realisiert (s. Figur 3). Die Schneidvorrichtung 2 umfasst eine Steuereinheit, eine Halterung 3, ein Ultraschallschneidmesser 4 und eine Sensoreinheit mit einem Abstandssensor 5. Das Ultraschallschneidmesser 4 und die Sensoreinheit sind mit der Halterung 3 mechanisch gekoppelt. Die Sensoreinheit ist in Bezug auf eine Verarbeitungsrichtung des zu schneidenden Gummibauteils 1 vor dem Ultraschallschneidmesser 4 angeordnet. Die Sensoreinheit und das Ultraschallschneidmesser 4 sind ferner signaltechnisch mit der Steuereinheit gekoppelt, sodass Signale von der Sensoreinheit von der Steuereinheit empfangen werden können und Steuerbefehle von der Steuereinheit an das Ultraschallschneidmesser 4 gesendet werden können. Die Sensoreinheit und das Ultraschallschneidmesser 4 beinhalten entsprechende Elektronik, die sie zu einem Signalempfang und/oder einer Signalübermittlung befähigen.

Die Sensoreinheit ist zudem dazu eingerichtet, mittels des Abstandssensors 5 einen Abstand A zwischen dem Abstandssensor 5 und einer Messplatte 7 zu erfassen, die mit einer Rolle 6 gekoppelt ist. Der Abstandssensor 5, die Messplatte 7 und die Rolle 6 bilden eine Abtastungseinheit der Schneidvorrichtung 2 bzw. der Sensoreinheit aus. Der zu messende Abstand A variiert in Abhängigkeit von einer Dicke des Gummibauteils 1 unter der Rolle 6. Das Gummibauteil 1 drückt somit die Rolle 6 nach oben und lässt diese in dünneren Bereichen wieder nach unten bewegen. Mit der Rolle 6 bewegt sich auch die Messeplatte 7 nach oben oder unten und der Abstand A zwischen der Messplatte 7 und dem Abstandssensor 5 verändert sich, da der Abstandssensor 5 gemäß dem illustrierten Ausführungsbeispiel in Figur 3 ortsfest mit der Halterung 3 verbunden ist. Der Abstand A ist somit repräsentativ für eine lokale Dicke des zu schneidenden Gummibauteils 1 an der Position der Rolle 6.

In einem Schritt S3 wird der aktuelle Abstand A mittels des Abstandssensors 5 erfasst und zum Beispiel an die Steuereinheit übermittelt.

In einem Schritt S4 ermittelt die Steuereinheit aus dem Abstand A die zugehörige lokale Dicke des Gummibauteils 1 und übermittelt einen Steuerbefehl zum Steuern des Ultraschallschneidmessers 4 in Abhängigkeit von dem erfassten Abstand A bzw. der ermittelten lokalen Dicke des Gummibauteils 1. Ein solcher Steuerbefehl umfasst insbesondere eine Anweisung zum Anpassen einer Messeramplitude und/oder eines Messervorschubs des Ultraschallschneidmessers 4. Somit kann mittels automatisierter Dickenerfassung das Gummibauteil 1 zuverlässig geschnitten werden.

Mittels des beschriebenen Verfahrens kann zu einer besonders glatten Schnittkante beigetragen werden, die sich vorteilhaft auf die weitere Reifenherstellung auswirken kann. Ein unerwünschtes Vulkanisieren oder eine mangelhafte Schnittqualität können somit vermieden oder zumindest reduziert werden. Das Verfahren ermöglicht es, eine passende Schneidleistung für jeden Bereich des Gummibauteils 1 automatisiert bereitzustellen.

Figur 3 zeigt eine schematische Darstellung der Schneidvorrichtung 2 in einer perspektivischen Ansicht. Der Abstandssensor 5 ist räumlich vor dem Ultraschallschneidmesser 4 angeordnet. Beispielsweise ist der Abstandssensor 5 etwa 5 mm, 20 mm, 40 mm oder 100 mm vor dem Ultraschallschneidmesser 4 angeordnet. Ferner kann eine weitere Rolle 8 hinter dem Ultraschallschneidmesser 4 vorgesehen sein, welche zu einer zuverlässigen Führung des Gummibauteils 1 beitragen kann. Darüber hinaus kann das Ultraschallschneidmesser 4 auch im Hinblick auf einen Schneidwinkel vorgegeben ausgerichtet sein. Zum Beispiel wird das Gummibauteil 1 von oben oder von der Seite nicht zwingend in einem senkrechten Winkel, sondern unter einem Winkel zwischen 60-90° geschnitten. Somit kann eine größere Schnittkantenfläche ausgebildet werden, die sich nutzbringend auf ein späteres Zusammenkleben auswirken kann.

Mittels der beschriebenen Schneidvorrichtung 2 und des beschriebenen Verfahrens sind keine manuelle Bestimmung und Eingabe von Rezeptwerten für verschiedene Gummibauteile 1 und die damit einhergehende Vielzahl unterschiedlicher Reifen nötig. Eine Einrichtzeit zum Bearbeiten des Gummibauteils 1 kann dadurch signifikant verkürzt werden. Zudem sind deutlich feinere und stufenlose Anpassung der Schneidparameter an die unterschiedlichen Materialien verschiedener Gummibauteile möglich. Somit kann zu einer entscheidenden Verbesserung des Schnittergebnisses beigetragen werden. Die Schneidvorrichtung 2 und das Verfahren eignen sich nicht nur zum Herstellen oder Schneiden von LKW-Reifen, sondern können für diverse Gummibauteile genutzt werden, bei denen ein konturiertes Gummi geschnitten werden soll.

### Bezugszeichenliste

- 1: Gummibauteil
- 2: Schneidvorrichtung
- 3: Halterung der Schneidvorrichtung
- 4: Ultraschallschneidmesser der Schneidvorrichtung
- 5: Abstandssensor der Schneidvorrichtung
- 6: Rolle der Schneidvorrichtung
- 7: Messplatte
- 8: weitere Rolle der Schneidvorrichtung

- A: Abstand zwischen Gummibauteil und Abstandssensor
- L: Längsachse des Gummibauteils
- S(i): Schritte eines Verfahrens zum Herstellen eines Reifens für ein Kraftfahrzeug

## Patentansprüche

1. Verfahren zum Herstellen eines Reifens für ein Kraftfahrzeug, umfassend:
- Bereitstellen eines Gummibauteils (1), das entlang einer Längsachse (L) eine Materialbahn zum Ausbilden des Reifens einrichtet und einen vorgegebenen Profilquerschnitt aufweist,
- Bereitstellen eines Systems (2) zum Schneiden des Gummibauteils (1), wobei das System (2) eine Steuereinheit, eine Halterung (3), ein Ultraschallschneidmesser (4) und eine Sensoreinheit mit einem Abstandssensor (5) umfasst, das Ultraschallschneidmesser (4) und die Sensoreinheit sind mit der Halterung (3) vorgegeben gekoppelt, wobei die Sensoreinheit in Bezug auf eine Verarbeitungsrichtung des zu schneidenden Gummibauteils (1) vor dem Ultraschallschneidmesser (4) angeordnet ist, wobei die Sensoreinheit und das Ultraschallschneidmesser (4) ferner signaltechnisch mit der Steuereinheit gekoppelt sind, **dadurch gekennzeichnet dass**
die Sensoreinheit dazu eingerichtet ist, mittels des Abstandssensors (5) einen Abstand (A) zu erfassen, der repräsentativ ist für eine lokale Dicke des zu schneidenden Gummibauteils (1), und dass das Verfahren ferner die folgenden Schritte umfasst:
- Erfassen des Abstands (A) mittels des Abstandssensors (5), und
- Steuern des Ultraschallschneidmessers (4) mittels der Steuereinheit zum Schneiden des Gummibauteils (1) in Abhängigkeit von dem erfassten Abstand (A).

2. Verfahren nach Anspruch 1, bei dem das Steuern des Ultraschallschneidmessers (4) umfasst:
Einstellen eines Messervorschubs des Ultraschallschneidmessers (4) in Abhängigkeit von dem Abstand (A).

3. Verfahren nach Anspruch 2, umfassend:
- Erfassen eines ersten Abstands an einer ersten Position des Gummibauteils (1),
- Einstellen eines ersten Messervorschubs des Ultraschallschneidmessers (4) in Abhängigkeit von dem ersten Abstand,
- Erfassen eines zweiten Abstands an einer zweiten Position des Gummibauteils (1), und
- Einstellen eines zweiten Messervorschubs des Ultraschallschneidmessers (4) in Abhängigkeit von dem zweiten Abstand, wobei der erste Abstand größer ist als der zweite Abstand und dadurch das Ultraschallschneidmesser (4) so angesteuert wird, dass der erste Messervorschub größer eingestellt wird als der zweite Messervorschub.

4. Verfahren nach einem der vorhergehenden Ansprüche, bei dem das Steuern des Ultraschallschneidmessers (4) umfasst:
Einstellen einer Messeramplitude des Ultraschallschneidmessers (4) in Abhängigkeit von dem Abstand (A).

5. Verfahren nach Anspruch 4, umfassend:
- Erfassen eines ersten Abstands an einer ersten Position des Gummibauteils (1),
- Einstellen einer ersten Messeramplitude des Ultraschallschneidmessers (4) in Abhängigkeit von dem ersten Abstand,
- Erfassen eines zweiten Abstands an einer zweiten Position des Gummibauteils (1), und
- Einstellen einer zweiten Messeramplitude des Ultraschallschneidmessers (4) in Abhängigkeit von dem zweiten Abstand, wobei der erste Abstand größer ist als der zweite Abstand und dadurch das Ultraschallschneidmesser (4) so angesteuert wird, dass die erste Messeramplitude kleiner eingestellt wird als die zweite Messeramplitude.

6. Verfahren nach einem der vorhergehenden Ansprüche, bei dem das Steuern des Ultraschallschneidmessers (4) umfasst:
- Einstellen und Konstanthalten einer maximal zulässigen Messeramplitude des Ultraschallschneidmessers (4), und
- Einstellen eines Messervorschubs des Ultraschallschneidmessers (4) in Abhängigkeit von dem Abstand (A).

7. Verfahren nach einem der vorhergehenden Ansprüche, umfassend:
- Ermitteln einer zugehörigen lokalen Dicke des Gummibauteils (1) in Abhängigkeit von dem erfassten Abstand (A), und
- Steuern des Ultraschallschneidmessers (4) zum Schneiden des Gummibauteils (1) mittels der Steuereinheit in Abhängigkeit von der ermittelten lokalen Dicke des Gummibauteils (1).

8. Verfahren nach einem der vorhergehenden Ansprüche, bei dem das System (2) ferner eine Abtastungseinheit mit einer Rolle (6) und einer Messplatte (7) aufweist, die miteinander und mit der Halterung (3) gekoppelt sind, wobei die Messplatte (7) in Abstimmung auf den Abstandssensor (5) vorgegeben angeordnet und der Abstand (A) zwischen dem Abstandssensor (5) und der Messplatte (7) eingerichtet ist, umfassend:
Inkontaktbringen der Rolle (6) mit einer Oberseite des Gummibauteils (1) und dadurch Ausbilden und Erfassen des Abstands (A) zwischen dem Abstandssensor (5) und der Messplatte (7).

9. Verfahren nach einem der vorhergehenden Ansprüche, bei dem das Erfassen des Abstands (A) mittels des Abstandssensors (5) und das Steuern des Ultraschallschneidmessers (4) in Abhängigkeit von dem erfassten Abstand (A) fortlaufend in Abhängigkeit von einer Verarbeitungsbewegung des Gummibauteils (1) durchgeführt wird, umfassend:
- fortlaufendes Ermitteln einer jeweiligen lokalen Dicke des Gummibauteils (1) in Abhängigkeit von dem zugehörigen Abstand (A), und
- fortlaufendes Steuern des Ultraschallschneidmessers (4) in Abhängigkeit von der ermittelten lokalen Dicke des Gummibauteils (1).

10. System (2) zum Herstellen eines Reifens für ein Kraftfahrzeug, aufweisend:
- eine Steuereinheit,
- eine Halterung (3),
- ein Ultraschallschneidmesser (4), das mit der Halterung (3) vorgegeben gekoppelt ist, und
- eine Sensoreinheit mit einem Abstandssensor (5), wobei die Sensoreinheit mit der Halterung (3) vorgegeben gekoppelt und in Bezug auf eine Verarbeitungsrichtung eines zu schneidenden Gummibauteils (1) vor dem Ultraschallschneidmesser (4) angeordnet ist, wobei die Sensoreinheit und das Ultraschallschneidmesser (4) ferner signaltechnisch mit der Steuereinheit gekoppelt sind, **dadurch gekennzeichnet dass**
die Sensoreinheit dazu eingerichtet ist, mittels des Abstandssensors (5) einen Abstand (A) zu erfassen, der repräsentativ ist für eine lokale Dicke des zu schneidenden Gummibauteils (1), sodass das Ultraschallschneidmesser (4) zum Schneiden des Gummibauteils (1) mittels der Steuereinheit in Abhängigkeit von dem erfassten Abstand (A) ansteuerbar ist.

11. System (2) nach Anspruch 10, aufweisend:
eine Abtastungseinheit mit einer Rolle (6) und einer Messplatte (7), die miteinander und mit der Halterung (3) gekoppelt sind, wobei die Rolle (6) dazu eingerichtet ist, in Kontakt mit einer Oberseite des zu schneidenden Gummibauteils (1) zu kommen, und wobei die Messplatte (7) in Abstimmung auf den Abstandssensor (5) vorgegeben angeordnet und der Abstand (A) zwischen dem Abstandssensor (5) und der Messplatte (7) eingerichtet ist.

## Claims

1. Method for producing a tyre for a motor vehicle, comprising:
- providing a rubber component (1), which sets up a material web for forming the tyre along a longitudinal axis (L) and has a predefined profile cross section,
- providing a system (2) for cutting the rubber component (1), wherein the system (2) comprises a control unit, a bracket (3), an ultrasonic cutting blade (4) and a sensor unit having a distance sensor (5), the ultrasonic cutting blade (4) and the sensor unit are coupled to the bracket (3) in a predefined manner, wherein the sensor unit is arranged in front of the ultrasonic cutting blade (4) relative to a processing direction of the rubber component (1) to be cut, wherein the sensor unit and the ultrasonic cutting blade (4) are also coupled to the control unit for signalling purposes, **characterized in that** the sensor unit is configured to record a distance (A) by means of the distance sensor (5), the distance being representative of a local thickness of the rubber component (1) to be cut, and **in that** the method also comprises the following steps:
- recording the distance (A) by means of the distance sensor (5), and
- controlling the ultrasonic cutting blade (4) by means of the control unit in order to cut the rubber component (1) depending on the recorded distance (A).

2. Method according to Claim 1, in which controlling the ultrasonic cutting blade (4) comprises:
adjusting a blade advancement of the ultrasonic cutting blade (4) depending on the distance (A).

3. Method according to Claim 2, comprising:
- detecting a first distance at a first position of the rubber component (1),
- adjusting a first blade advancement of the ultrasonic cutting blade (4) depending on the first distance,
- detecting a second distance at a second position of the rubber component (1), and
- adjusting a second blade advancement of the ultrasonic cutting blade (4) depending on the second distance, wherein the first distance is greater than the second distance and thus the ultrasonic cutting blade (4) is actuated such that the first blade advancement is adjusted to be greater than the second blade advancement.

4. Method according to any of the preceding claims, in which controlling the ultrasonic cutting blade (4) comprises:
adjusting a blade amplitude of the ultrasonic cutting blade (4) depending on the distance (A).

5. Method according to Claim 4, comprising:
- detecting a first distance at a first position of the rubber component (1),
- adjusting a first blade amplitude of the ultrasonic cutting blade (4) depending on the first distance,
- detecting a second distance at a second position of the rubber component (1), and
- adjusting a second blade amplitude of the ultrasonic cutting blade (4) depending on the second distance, wherein the first distance is greater than the second distance and thus the ultrasonic cutting blade (4) is actuated such that the first blade amplitude is adjusted to be lower than the second blade amplitude.

6. Method according to any of the preceding claims, in which controlling the ultrasonic cutting blade (4) comprises:
- adjusting and maintaining a maximum permissible blade amplitude of the ultrasonic cutting blade (4), and
- adjusting a blade advancement of the ultrasonic cutting blade (4) depending on the distance (A).

7. Method according to any of the preceding claims, comprising:
- determining an associated local thickness of the rubber component (1) depending on the detected distance (A), and
- controlling the ultrasonic cutting blade (4) for cutting the rubber component (1) by means of the control unit depending on the determined local thickness of the rubber component (1).

8. Method according to any of the preceding claims, in which the system (2) also comprises a scanning unit having a roller (6) and a measuring plate (7) which are coupled to each other and to the bracket (3), wherein the measuring plate (7) is arranged so as to be predefined in a manner adapted to the distance sensor (5) and the distance (A) between the distance sensor (5) and the measuring plate (7) is set up, comprising:
bringing the roller (6) into contact with a top side of the rubber component (1) and thus forming and recording the distance (A) between the distance sensor (5) and the measuring plate (7).

9. Method according to any of the preceding claims, in which recording the distance (A) by means of the distance sensor (5) and controlling the ultrasonic cutting blade (4) depending on the recorded distance (A) are carried out continuously depending on a processing movement of the rubber component (1), comprising:
- continuously determining a respective local thickness of the rubber component (1) depending on the associated distance (A), and
- continuously controlling the ultrasonic cutting blade (4) depending on the determined local thickness of the rubber component (1).

10. System (2) for producing a tyre for a motor vehicle, comprising:
- a control unit,
- a bracket (3),
- an ultrasonic cutting blade (4), which is coupled to the bracket (3) in a predefined manner, and
- a sensor unit having a distance sensor (5), wherein the sensor unit is coupled to the bracket (3) in a predefined manner and arranged in front of the ultrasonic cutting blade (4) relative to a processing direction of a rubber component (1) to be cut, wherein the sensor unit and the ultrasonic cutting blade (4) are also coupled to the control unit for signalling purposes, **characterized in that** the sensor unit is configured to record a distance (A) by means of the distance sensor (5), the distance being representative of a local thickness of the rubber component (1) to be cut, so that the ultrasonic cutting blade (4) for cutting the rubber component (1) can be actuated by means of the control unit depending on the recorded distance (A).

11. System (2) according to Claim 10, comprising:
a scanning unit having a roller (6) and a measuring plate (7) which are coupled to each other and to the bracket (3), wherein the roller (6) is configured to come into contact with a top side of the rubber component (1) to be cut, and wherein the measuring plate (7) is arranged so as to be predefined in a manner adapted to the distance sensor (5) and the distance (A) between the distance sensor (5) and the measuring plate (7) is set up.

## Revendications

1. Procédé de fabrication d'un pneu pour un véhicule à moteur, comprenant :
- la fourniture d'un composant en caoutchouc (1), qui aménage une bande de matériau pour réaliser le pneu le long d'un axe longitudinal (L) et comporte une section transversale de profil (P) prédéfinie,
- la fourniture d'un système (2) pour couper le composant en caoutchouc (1), le système (2) comprenant une unité de commande, un support (3), une lame de coupe à ultrasons (4) et une unité de capteur avec un capteur de distance (5), la lame de coupe à ultrasons (4) et l'unité de capteur étant couplées de manière prédéfinie au support (3), l'unité de capteur étant agencée avant la lame de coupe à ultrasons (4) par rapport à une direction de traitement du composant en caoutchouc (1) à couper, l'unité de capteur et la lame de coupe à ultrasons (4) étant en outre couplées par signal à l'unité de commande, **caractérisé en ce que** l'unité de capteur est adaptée pour détecter, au moyen du capteur de distance (5), une distance (A) qui est représentative d'une épaisseur locale du composant en caoutchouc (1) à couper, et **en ce que** le procédé comprend en outre les étapes suivantes :
- la détection de la distance (A) au moyen du capteur de distance (5), et
- la commande de la lame de coupe à ultrasons (4) au moyen de l'unité de commande pour couper le composant en caoutchouc (1) en fonction de la distance détectée (A).

2. Procédé selon la revendication 1, dans lequel la commande de la lame de coupe à ultrasons (4) comprend :
le réglage d'une avance de lame de la lame de coupe à ultrasons (4) en fonction de la distance (A).

3. Procédé selon la revendication 2, comprenant :
- la détection d'une première distance à une première position du composant en caoutchouc (1),
- le réglage d'une première avance de lame de la lame de coupe à ultrasons (4) en fonction de la première distance,
- la détection d'une deuxième distance à une deuxième position du composant en caoutchouc (1), et
- le réglage d'une deuxième avance de lame de la lame de coupe à ultrasons (4) en fonction de la deuxième distance, la première distance étant plus grande que la deuxième distance et la lame de coupe à ultrasons (4) étant ainsi commandée de telle sorte que la première avance de lame est réglée plus grande que la deuxième avance de lame.

4. Procédé selon l'une quelconque des revendications précédentes, dans lequel la commande de la lame de coupe à ultrasons (4) comprend :
le réglage d'une amplitude de lame de la lame de coupe à ultrasons (4) en fonction de la distance (A).

5. Procédé selon la revendication 4, comprenant :
- la détection d'une première distance à une première position du composant en caoutchouc (1),
- le réglage d'une première amplitude de lame de la lame de coupe à ultrasons (4) en fonction de la première distance,
- la détection d'une deuxième distance à une deuxième position du composant en caoutchouc (1), et
- le réglage d'une deuxième amplitude de lame de la lame de coupe à ultrasons (4) en fonction de la deuxième distance, la première distance étant plus grande que la deuxième distance et la lame de coupe à ultrasons (4) étant ainsi commandée de telle sorte que la première amplitude de lame est réglée plus grande que la deuxième amplitude de lame.

6. Procédé selon l'une quelconque des revendications précédentes, dans lequel la commande de la lame de coupe à ultrasons (4) comprend :
- le réglage et le maintien constant d'une amplitude de lame maximale admissible de la lame de coupe à ultrasons (4), et
- le réglage d'une avance de lame de la lame de coupe à ultrasons (4) en fonction de la distance (A).

7. Procédé selon l'une quelconque des revendications précédentes, comprenant :
- la détermination d'une épaisseur locale correspondante du composant en caoutchouc (1) en fonction de la distance détectée (A), et
- la commande de la lame de coupe à ultrasons (4) pour couper le composant en caoutchouc (1) au moyen de l'unité de commande en fonction de l'épaisseur locale déterminée du composant en caoutchouc (1).

8. Procédé selon l'une quelconque des revendications précédentes, dans lequel le système (2) comporte en outre une unité de balayage comprenant un rouleau (6) et une plaque de mesure (7) couplés l'un à l'autre et au support (3), la plaque de mesure (7) étant agencée de manière prédéfinie en accord avec le capteur de distance (5) et la distance (A) entre le capteur de distance (5) et la plaque de mesure (7) étant adaptée, comprenant :
la mise en contact du rouleau (6) avec un côté supérieur du composant en caoutchouc (1), formant et détectant ainsi la distance (A) entre le capteur de distance (5) et la plaque de mesure (7).

9. Procédé selon l'une quelconque des revendications précédentes, dans lequel la détection de la distance (A) au moyen du capteur de distance (5) et la commande de la lame de coupe à ultrasons (4) en fonction de la distance détectée (A) sont effectuées de manière continue en fonction d'un mouvement de traitement du composant en caoutchouc (1), comprenant :
- la détermination continue d'une épaisseur locale respective du composant en caoutchouc (1) en fonction de la distance correspondante (A), et
- la commande continue de la lame de coupe à ultrasons (4) en fonction de l'épaisseur locale déterminée du composant en caoutchouc (1).

10. Système (2) de fabrication d'un pneu pour un véhicule à moteur, comprenant :
- une unité de commande,
- un support (3),
- une lame de coupe à ultrasons (4) couplée de manière prédéfinie au support (3), et
- une unité de capteur avec un capteur de distance (5), l'unité de capteur étant couplée de manière prédéfinie au support (3) et agencée avant la lame de coupe à ultrasons (4) par rapport à une direction de traitement d'un composant en caoutchouc (1) à couper, l'unité de capteur et la lame de coupe à ultrasons (4) étant en outre couplées par signal à l'unité de commande, **caractérisé en ce que** l'unité de capteur est adaptée pour détecter, au moyen du capteur de distance (5), une distance (A) qui est représentative d'une épaisseur locale du composant en caoutchouc (1) à couper, de telle sorte que la lame de coupe à ultrasons (4) peut être commandée pour couper le composant en caoutchouc (1) au moyen de l'unité de commande en fonction de la distance détectée (A).

11. Système (2) selon la revendication 10, comportant :
une unité de balayage avec un rouleau (6) et une plaque de mesure (7) couplés l'un à l'autre et au support (3), le rouleau (6) étant adapté pour venir en contact avec un côté supérieur du composant en caoutchouc (1) à couper, et la plaque de mesure (7) étant agencée de manière prédéfinie en accord avec le capteur de distance (5) et la distance (A) entre le capteur de distance (5) et la plaque de mesure (7) étant adaptée.
